**Europäisches Patentamt**

**European Patent Office**

**Office européen des brevets**

(11) Veröffentlichungsnummer: **0 024 513**
**B1**

(12) ## EUROPÄISCHE PATENTSCHRIFT

(45) Veröffentlichungstag der Patentschrift:
11.07.84

(51) Int. Cl.³: **C 08 L 95/00, E 01 C 7/18**

(21) Anmeldenummer: **80103875.3**

(22) Anmeldetag: **08.07.80**

(54) **Pulverförmiges Bitumenkonzentrat und seine Verwendung.**

(30) Priorität: **17.08.79 DE 2933339**

(43) Veröffentlichungstag der Anmeldung:
**11.03.81 Patentblatt 81/10**

(45) Bekanntmachung des Hinweises auf die Patenterteilung:
**11.07.84 Patentblatt 84/28**

(84) Benannte Vertragsstaaten:
**AT BE CH DE FR GB IT LI NL SE**

(56) Entgegenhaltungen:
**GB - A - 2 009 758**
**US - A - 2 949 378**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft,
Weissfrauenstrasse 9, D-6000 Frankfurt am Main 1 (DE)**

(72) Erfinder: **Müller, Karl-Hans, Dr., Robert Koch-Strasse 17,
D-6454 Bruchköbel (DE)**
Erfinder: **Barthel, Walter, Gartenstrasse 7,
D-6456 Langenselbold (DE)**

ACTORUM AG

## Beschreibung

Bitumen sind nach DIN 55 946 ein dunkelfarbiges, halbfestes bis springhartes, schmelzbares, hochmolekulares Kohlenwasserstoffgemisch, welches bei der schonenden Aufbereitung von Erdölen gewonnen wird, und die in Schwefelkohlenstoff löslichen Anteile der natürlichen Asphalte sowie Erdwachs und Montanwachs (vgl. Römpp Lexikon der Chemie, 7. Auflage, Seite 377).

Derartige Substanzen, die im angelsächsischen Bereich (vor allem USA) als Asphalt bezeichnet werden, werden im Gemisch mit Kalksteinmehl, Granit-, Basalt-, Diabas-, Gabbro-Mehl im Strassenbau eingesetzt.

Von besonderer Bedeutung ist in diesem Zusammenhang die Verwendung von Naturasphalt.

Naturasphalt kann in Gemischen mit bituminösen Bindemitteln nach DIN 1995 zur Herstellung mörtelreicher Deckschichten (z.B. Gussasphalt, Asphaltbeton, Sandasphalt und Asphaltmastix) eingesetzt werden. Ein derartiger Naturasphalt ist z.B. Trinidad-Epuré, welcher wie folgt zusammengesetzt ist:

| | |
|---|---|
| lösliches Bitumen | 53 bis 55 Gew.-% |
| Mineralanteil | 36 bis 37 Gew.-% |
| restliche Bestandteile | 9 bis 10 Gew.-% |

(vgl. Handbuch für Strassenwesen Planung-Bau-Verkehr-Betrieb 1979, Otto Elsner Verlagsgesellschaft, Darmstadt).

Trinidad-Epuré sowie die anderen bekannten Naturasphalte weisen den Nachteil auf, dass sie vielfach harte, kompakte Massen bilden, die zunächst in kleine Stücke zerschlagen werden müssen, um mit den als Zuschlag verwendeten Stoffen gleichmässig mischbar zu sein.

Es ist bereits vorgeschlagen worden, Asphaltit in gekörntem Zustand anzuliefern und die Fliessfähigkeit des Granulats durch spezielle Zusätze zu verbessern.

Aus der OE-PS 280 876 ist ein Verfahren bekannt, nach dem man gekörnten Asphaltit mit einer Benetzungsflüssigkeit, z.B. Schwarzlauge, behandelt und das fertige Produkt dann in luftdichten Behältern verschweisst.

Aufgabe der Erfindung ist ein pulverförmiges, fliessfähiges und temperaturstabiles Bitumenkonzentrat.

Gegenstand der Erfindung ist ein pulverförmiges Bitumenkonzentrat mit einem Gehalt an synthetischer Kieselsäure von 10 bis 85 Gew.-%, vorzugsweise von 40 bis 80 Gew.-%.

Als synthetische Kieselsäure können gefällte als auch pyrogen hergestellte Kieselsäuren verwendet werden.

Die gefällte Kieselsäure kann eine BET-Oberfläche von 120 bis 500 m²/g aufweisen. Sie kann gegebenenfalls dampfstrahlvermahlen, sprühgetrocknet oder sprühgetrocknet und vermahlen sein.

Die pyrogen hergestellte Kieselsäure kann eine BET-Oberfläche von 100 bis 400 m²/g aufweisen.

Das erfindungsgemässe Bitumenkonzentrat kann man erstellen, indem man flüssiges Bitumen mit der synthetischen Kieselsäure einfach vermischt oder das flüssige Bitumen auf die synthetische Kieselsäure aufsprüht.

Das erfindungsgemässe Bitumenkonzentrat weist die Vorteile auf, dass es trotz des hohen Bitumenanteiles pulverförmig, temperaturstabil und fliessfähig ist.

Weiterhin zeigt sich bei dem weiteren Gegenstand der Erfindung – der Verwendung des erfindungsgemässen, pulverförmigen Bitumenkonzentrates in Asphaltmischungen – für den Strassenbau – eine überraschend hohe Versteifungswirkung.

Das erfindungsgemässe pulverförmige Bitumenkonzentrat wird anhand der folgenden Beispiele näher erläutert und beschrieben:

Zur Herstellung des pulverförmigen Bitumenkonzentrates werden die folgenden Arbeitsgänge durchgeführt:

1. Erwärmen der jeweiligen Kieselsäure und des Bitumens auf 140 °C im Trockenschrank.

2. Vorlage der abgewogenen Kieselsäuremenge im Mischgefäss. Portionenweise Zugabe des Bitumens unter Rühren (per Hand oder mit Flügelrührer, je nach Menge), kräftiges Nachmischen bis zur sichtbaren Homogenisierung.

3. Ausbringen der noch heissen Masse auf ein Blech, Verteilung bis zum Abkühlen auf Raumtemperatur.

4. Die kalte, krümelige bis granulatartige Masse wird im Braun-Küchenmixer ca. 30 Sekunden zerschlagen und gemahlen.

5. Ausbringen des Pulvers auf ein Sieb 0,75 mm, Absiebung, Homogenisierung im Glasgefäss im Turbula-Mischer.

Von den jeweiligen Pulvern werden die Schüttgewichte bestimmt (g/cm³). Um eine Aussage über die Lagerstabilität zu finden, werden Druckprüfungen über 36 Stunden in Druckzylindern (⌀49 mm, Auflagen 3,2 kp = 1,7 N/cm² und 11,2 kp = 5,95 N/cm²) bei Normaltemperatur durchgeführt. Die Betonung geschieht nach dem Schulnotensystem von 1–6. Die Ergebnisse sind in der Tabelle 1 zusammengestellt.

Um die Temperaturstabilität der einzelnen Bitumenpulver zu überprüfen, werden jeweilige Proben bei steigender Temperatur im Trockenschrank getempert (Steigerung jeweils um 10 bzw. 20 °C). Die Ergebnisse sind in der Tabelle 2 zusammengestellt.

Die Bestimmung des Schüttgewichtes erfolgt nach DIN

Bewertungstabelle für Druckprüfung:

3 = befriedigend = locker geformt, bei leichtem Fingerdruck weitgehend pulvrig zerfallend

4 = ausreichend = locker verbacken, mit Fingerdruck noch feinst zerfallend

5 = mangelhaft = halbfest verbacken, mit Fingerdruck nicht mehr feinst zerfallend

6 = ungenügend = fest verbacken

Eine ausführliche Beschreibung dieser Bewertungsdurchführung findet sich in Seifen-Öle-Fette-Wachse 8900 Augsburg, Jahrgang 94 / 1968), Heft 12, Seiten 849–858.

Ein Sonderdruck dieser Literaturstelle ist als Nr. 31 in der Schriftenreihe Pigmente der Firma Degussa erschienen.

Tabelle 1

| Probenbezeichnung | Schüttge-wicht g/cm³ | Druckprüfung | | Bemerkung |
|---|---|---|---|---|
| | | 1,7 N/cm² | 5,95 N/cm² | |
| 50% B 80 50% SIPERNAT 22® | 0,349 | 3 | 3–4 | trockenes Pulver |
| 60% B 80 40% SIPERNAT 22® | 0,373 | 4 | 4–5 | trockenes Pulver |
| 66,7% B 80 33,3% SIPERNAT 22® | 0,437 | 4 | 5 | trockenes Pulver |
| 70% B 80 30% SIPERNAT 22® | 0,440 | 4 | 5 | trockenes Pulver |
| 80% B 80 20% SIPERNAT 22® | 0,459 | 5 | 6 | trockenes Pulver |
| 60% B 80 40% FK 320 | 0,450 | 4 | 5 | Pulver |
| 66,7% B 80 33,3% FK 320 DS | 0,578 | 5 | 6 | trockenes Pulver |

Tabelle 2

| Probenbezeichnung | Ausgang | 1 Stunde 80°C | 1 Stunde 90°C |
|---|---|---|---|
| 50% B 80 50% SIPERNAT 22® | grau-braun locker | grau-braun locker | grau-braun locker |
| 60% B 80 40% SIPERNAT 22® | grau locker | grau locker | grau locker |
| 66,7% B 80 33,3% SIPERNAT 22® | grau locker | grau locker | hellbrau locker |
| 70% B 80 30% SIPERNAT 22® | grau locker | grau locker | hellbraun locker |
| 80% B 80 20% SIPERNAT 22® | grau locker | braun locker | dunkelbraun leicht verbacken |
| 60% B 80 40% FK 320 | grau locker | grau locker | hellbraun locker |
| 66,7% B 80 33,3% FK 320 DS | grau-braun locker | grau-braun locker | mittelbraun locker |

Tabelle 2

| Probenbezeichung | 1 Stunde 100°C | 14 Stunden 120°C | 1 Stunde 140°C | 1 Stunde 160°C | 1 Stunde 180°C |
|---|---|---|---|---|---|
| 50% B 80 50% SIPERNAT 22® | grau-braun locker | hell-beige locker | hell-beige locker | hell-beige locker | hellbraun locker |
| 60% B 80 40% SIPERNAT 22® | grau locker | beige locker | beige locker | mittelbraun locker | braun locker |
| 66,7% B 80 33,3% SIPERNAT 22® | mittelbraun locker | dunkelbraun locker | dunkelbraun leicht verbacken | dunkelbraun verbacken | schwarz verbacken |
| 70% B 80 30% SIPERNAT 22® | mittelbraun locker | dunkelbraun locker | dunkelbraun leicht verbacken | dunkelbraun verbacken | schwarz verbacken |
| 80% B 80 20% SIPERNAT 22® | dunkelbraun verbacken | schwarz verbacken | schwarz verbacken | schwarz verbacken | schwarz verbacken |
| 60% B 80 40% FK 320 | braun locker | hellbraun leicht verbacken | braun leicht verbacken | braun verbacken | dunkelbraun verbacken |
| 66,7% B 80 33,3% FK 320 DS | braun locker | braun leicht verbacken | dunkelbraun verbacken | dunkelbraun verbacken | schwarz verbacken |

Die verwendete Kieselsäure FK 320 ist eine gefällte Kieselsäure mit den folgenden physikalisch-chemischen Kenndaten:

| Aussehen | lockeres, weisses Pulver |
|---|---|
| Rötgenstruktur | amorph |
| Oberfläche | 170 m²/g (nach BET) |
| Mittlere Grösse der Primärteilchen | 18 Nanometer |
| Spez. Gewicht | 2,05 g/ml |
| Reinheitsgrad | $SiO_2$[6] 98% |
| | $Na_2O$[6] 1% |
| | $Al_2O_3$[6] 0,2% |
| | $SO_3$[6] 0,8% |
| Trocknungsverlust[1] | 6% |
| Glühverlust[2, 3] | 5% |
| pH-Wert[4] | 6,3% |
| Löslichkeit | praktisch unlöslich in Wasser |
| Charakteristik | gefällte Kieselsäure |
| Stampfdichte[5] | 200 g/Liter |
| Siebrückstand nach Mocker (DIN 53 580) | 0,2% |

[1] DIN 53 198, Verf. A
[2] bezogen auf die 2 Stunden bei 105 °C getrocknete Substanz DIN 55 921
[3] DIN 52 911
[4] DIN 53 200
[5] DIN 53 194
[6] bezogen auf die 2 Stunden bei 1000 °C geglühte Substanz

Eine Kieselsäure 320 DS ist eine gefällte und dampfstrahlvermahlene Kieselsäure mit den folgenden physikalisch-chemischen Kenndaten:

| Aussehen | lockeres, weisses Pulver |
|---|---|
| Röntgenstruktur | amorph |
| Oberfläche | 170 m²/g (nach BET) |
| Mittlere Grösse der Primärteilchen | 18 Nanometer |
| Spez. Gewicht | 2,05 g/ml |
| Reinheitsgrad | $SiO_2$[6] 98% |
| | $Na_2O$[6] 1% |
| | $Al_2O_3$[6] 0,2% |
| | $SO_3$[6] 0,8% |
| Trocknungsverlust[1] | 6% |
| Glühverlust[2, 3] | 5% |
| pH-Wert[4] | 6,3% |
| Löslichkeit | praktisch unlöslich in Wasser |
| Charakteristik | gefällte Kieselsäure mit hoher Mahlfeinheit |
| Stampfdichte[5] | 70 g/l |
| Siebrückstand nach Mocker (DIN 53 580) | 0% |

[1] DIN 53 198, Verf. A
[2] bezogen auf die 2 Stunden bei 105 °C getrocknete Substanz
[3] DIN 52 911
[4] DIN 53 200
[5] DIN 53 194
[6] bezogen auf die bei 1000 °C geglühte Substanz

Die Kieselsäure Sipernat 22® ist eine gefällte und sprühgetrocknete Kieselsäure mit den folgenden physikalisch-chemischen Kenndaten

| Oberfläche nach BET | m²/g | 190 |
|---|---|---|
| Mittlere Grösse der Primärteilchen | Nanometer | 18 |
| Mittlere Grösse der Sekundärteilchen | Mikrometer | 80 |
| Stampfdichte (DIN 53 194) | g/l | 220 |
| Trocknungsverlust (DIN 55 921) (2 STD. bei 105 °C) | % | 6 |
| Glühverlust[1] (DIN 55 921) (2 STd. bei 1000 °C) | % | 5 |
| pH-Wert (DIN 53 200) | | 6,3 |
| $SiO_2$ (DIN 55 921)[3] | % | 98 |
| $Al_2O_3$ | % | 0,2 |
| $Fe_2O_3$ | % | 0,03 |
| $Na_2O$ | % | 1 |
| $SO_3$ | % | 0,8 |
| Siebrückstand nach Mocker (DIN 53 580) | % | 0,5 |
| Ölzahl (Nach DIN 53 199) | g/100 g | |

[1] bezogen auf die 2 Stunden bei 105 °C getrocknete Substanz
[2] in Wasser : Aceton oder Methanol 1:1
[3] bezogen auf die 2 Stunden bei 1000 °C geglühte Substanz
[4] enthält etwa 2% chemisch gebundenen Kohlenstoff

Anwendung des pulverförmigen Bitumenkonzentrates in Asphalt

Es handelt sich dabei um folgende Stoffe und Stoffkombinationen:

Sipernat 22®
B 80 auf Sipernat 22® (50/50), Pulver
Naturasphalt – Trinidad Epuré, unzerkleinert

Die Zusätze werden im Laboratorium den Mischungen eines für die Verwendung im klassifizierten Strassenbau geeigneten Asphaltbetons 0/11 mm zugegeben. Dabei sind unter Berücksichtigung der in den Zusätzen enthaltenen Mengen an Gesteinsmehl und Bindemitteln die sonstigen Zusammensetzungen der Mischungen gleich.

Als Bindemittel werden für eine Vergleichsmischung und die Mischung mit Zusätzen Strassenbaubitumen B 80, für eine zweite Vergleichsmischung Strassenbaubitumen B 65 vorgesehen.

Folgende Prüfungen werden vorgenommen:

1. Herstellung von Probekörpern nach Marshall aus den verschiedenen Asphaltmischungen

2. Bestimmung von Raumdichte, Hohlraumgehalt sowie von Stabilität und Fliesswert nach Marshall an den Probekörpern nach 1.

3. Durchführung von Kriechversuchen an je drei nach 1. hergestellten Probekörpern.

Untersuchungen und Untersuchungsergebnisse
Zusammensetzung und Herstellung der Probekörper

Für das Mineralgemisch zur Herstellung eines splittreichen Asphaltbetons 0/11 mm nach TV bit 3/72 werden Basaltedelsplitte, Basaltedelbrechsand, ein Natursand und ein handelsübliches Kalksteinmehl verwendet. Die Mineralstoffe, mit Ausnahme des Kalksteinmehls, werden in Kornklassen ausgesiebt und die Mineralmischungen entsprechend einem vorgesehenen Rezept wieder zusammengesetzt.

Anteil über 2,0 mm:
   Basaltedelsplitt 2/5, 5/8 u. 8/11
Sand 0,09/2,0 mm:
   Basaltedelbrechsand und Natursand (im Verhältnis 3 : 1)
Füller 0/0,09 mm:
   Kalksteinmehl, Basalteigenfüller + Zusatz

Damit wird für alle Mischungen die folgende Korngrössenverteilung des Mineralgemisches erreicht:

Siebdurchgang:

| 0,09 | 0,25 | 0,71 | 2,0 | 5,0 | 8,0 | 11,2 | mm |
|------|------|------|-----|-----|-----|------|-----|
| 8,6 | 15,0 | 25,0 | 40,0 | 67,0 | 84,0 | 100,0 | Gew.% |

Der Bindemittelgehalt aller Mischungen beträgt 5,9 Gew.-%.

Eine Übersicht über die Zusammensetzung der Mischungen gibt die Tabelle 3.

Mischvorgang und Probekörperherstellung

Die Asphaltmischungen werden in Chargen von 6.300 g bzw. 4.000 g im Labormischer unter Einhaltung eines einheitlichen Ablaufes gemischt.

Die pulverförmigen Zusätze werden nach dem Bitumenanteil, jedoch vor dem Kalksteinmehl in die heisse Mischung eingebracht.

Die entsprechende Menge Trinidad-Epuré wird aufgeschmolzen und vorher dem Bitumenanteil zugegeben.

An den Asphaltmischungen werden keine Besonderheiten beobachtet. In allen Fällen ergibt sich ein gleichmässig umhülltes, normal erscheinendes Mischgut.

Von jeder Mischungsvariante werden 5 + 3 = 8 Probekörper nach Marshall hergestellt.

Tabelle 3

| Mischg. Nr. | Zusatz | | | Bindemittel | | |
| | Art des Zusatzes | Menge Gew.-T | Sorte (original) | aus Zusatz Gew.-T | original Gew.-T | gesamt Gew.% |
|---|---|---|---|---|---|---|
| 1 | — | — | B 65 | — | 6,27 | 5,9 |
| 2 | — | — | B 80 | — | 6,27 | 5,9 |
| 3 | SIPERNAT 22® | 0,5 | B 80 | — | 6,27 | 5,9 |
| 8 | TRINIDAD-EPURE | 2,0 | B 80 | 1,1 | 5,17 | 5,9 |
| 9 | SIPERNAT mit B 80 (Pulver 50/50) | 2,0 | B 80 | 1,0 | 5,27 | 5,9 |

Tabelle 3

| Mischg. Nr. | Mineral aus Zusatz Gew.-T | aus Körnungen Gew.-T | Kalkstein Gew.-T | Eigenfüller Gew.-T | Sand Gew.-T | Splitt Gew.-T |
|---|---|---|---|---|---|---|
| 1 | — | 100 | 6,0 | 2,6 | 31,4 | 60 |
| 2 | — | 100 | 6,0 | 2,6 | 31,4 | 60 |
| 3 | 0,5 | 99,5 | 5,5 | 2,6 | 31,4 | 60 |
| 8 | 0,9 | 99,1 | 5,1 | 2,6 | 31,4 | 60 |
| 9 | 1,0 | 99,0 | 5,0 | 2,6 | 31,4 | 60 |

Von den acht Probekörpern wurden drei zur Bestimmung von Stabilität und Fliesswert und drei für den Kriechversuch verwendet.

Raumdichte und Hohlraumgehalt sind an allen Probekörpern ermittelt.

Die Ergebnisse sind in der Tabelle 4 zusammengestellt.

An 3 Probekörpern jeder Mischung werden Kriechversuche mit statischer Last durchgeführt. Dabei werden die Grundflächen der Probekörper durch eine Ausgleichschicht eingeebnet.

Bei dem Versuch wird auf den Probekörper bei einer Prüftemperatur von 40 °C eine gleichmässige Flächenbelastung aufgebracht.

Die einachsiale Druckspannung beträgt 0,1 MN/m². Das Entstehen des einachsialen Spannungszustandes wird durch Anordnung einer Gleitschicht gefördert. Die sich ergebenden Stauchungen $\varepsilon = \Delta h/h \cdot 1.000$ in ‰ werden im doppellogarithmischen Massstab aufgetragen, so dass die Funktion der Dehnungen von der Zeit nach 1 bis 5 Stunden einen asymptotischen Endwert erkennen lässt.

Für den Übergang $t \rightarrow \infty$ kann eine Enddehnung und ein Verformungsmodul $S_{mix}$ als Materialkennziffer abgeleitet werden.

Für die untersuchten Mischungen sind die Enddehnung und der Verformungsmodul in Tabelle 3 zusammengestellt.

| Mischung Nr. | Raumdichte | Rohdichte | Hohlraumgehalt | | Ausfüllungsgrad | Stabilität | Fliesswert |
| | | | im Asphalt | im Mineralgerüst | | | |
| | g/cm³ | g/cm³ | Vol.% | Vol.% | % | kN | mm |
|---|---|---|---|---|---|---|---|
| 1 | 2,569 | 2,635 | 2,50 | 17,3 | 85,5 | 7,6 | 6,0 |
| 2 | 2,570 | 2,635 | 2,47 | 17,3 | 85,7 | 6,9 | 5,3 |
| 3 | 2,561 | 2,635 | 2,81 | 17,6 | 84,0 | 7,5 | 5,8 |
| 8 | 2,561 | 2,635 | 2,81 | 17,6 | 84,0 | 7,0 | 6,0 |
| 9 | 2,556 | 2,635 | 3,00 | 17,7 | 83,1 | 7,7 | 5,9 |

Tabelle 4: Versuchsergebnisse an Probekörpern nach Marshall

| Mischung-Nr. | Enddehnung $\varepsilon_t$‰ | Verformungsmodul $S_{mix}$ (N/mm²) $t \rightarrow \infty$ |
|---|---|---|
| 1 | 5,8 | 17,2 |
| 2 | 6,2 | 16,2 |
| 3 | 5,6 | 17,9 |
| 8 | 6,1 | 16,5 |
| 9 | 5,6 | 17,8 |

Tabelle 5: Ergebnisse der Kriechversuche

Beurteilung der Versuchsergebnisse
Augenscheinliche Beurteilung der Asphaltmischungen

Die Mischungen mit Zusätzen (3, 8, 9) unterscheiden sich in Verhalten und Aussehen beim Mischen nicht von den Nullmischungen (1, 2).

Besonderheiten gegenüber normalem anlagengemischtem Mischgut werden nicht festgestellt.

Eigenschaften von Probekörpern
Die unter gleichen Verdichtungsbedingungen bei 135 °C hergestellten Probekörper zeigen Unterschiede in den Raumdichten zwischen den Nullmischungen einerseits und den Mischungen mit Zusätzen anderseits. Sie geben damit einen Hinweis auf die Verhältnisse beim Mischguteinbau.

Bei den Laborversuchen erhöht sich der durch die Hohlraumverhältnisse charakterisierte Verdichtungswiderstand des Mischguts bei 135 °C sowohl bei Zugabe von SIPERNAT 22 als auch von Trinidad-Epuré, d.h., beide Zusätze wirken versteifend.

Die grösste Wirkung wird durch die Zugabe des Sipernat/Bitumenpulvers (Mischung 9) erzeugt, wobei zu beachten ist, dass der Sipernatanteil im Gesamtgemisch nochmals gegenüber Mischung 3 erhöht ist. Einen interessanten Vergleich bieten Mischung 9 und Mischung 8 (Trinidad-Epuré), da in beiden Fällen Mineralstoff/Bindemittelkombinationen mit mengenmässig etwa gleichen Verhältnissen eingesetzt werden. Anhand der Ergebnisse kann festgestellt werden, dass die von Trinidad erzeugte Versteifung von den synthetisch hergestellten Produkten noch übertroffen wird.

Kriechversuch
Kriechversuche bei 40 °C geben über die Verformungsbeständigkeit des Mischgutes Auskunft. Sie weisen damit auf die Verhältnisse unter Verkehr bei erhöhten Aussentemperaturen hin.

Die Ergebnisse der Laboratoriumsversuche ergeben deutliche Steigerungen des massgebenden Verformungsmoduls der Mischungen mit SIPERNAT 22 (3 und 9) gegenüber der Vergleichsmischung mit B 80 (Mischung 2), bei gleichzeitiger Verminderung der entsprechenden Enddehnungen.

Die Ergebnisse der Kriechversuche bei 40 °C lassen eine gleiche Erhöhung der Verformungsbeständigkeit der Mischung mit Trinidad-Epuré nicht erkennen.

**Patentansprüche**

1. Pulverförmiges Bitumenkonzentrat mit einem Gehalt an synthetischer Kieselsäure von 10 bis 85 Gew.-%, vorzugsweise 40 bis 80 Gew.-%.

2. Verwendung des pulverförmigen Bitumenkonzentrates gemäss Anspruch 1, zur Herstellung von Asphaltmischungen für den Strassenbau.

**Claims**

1. A pulverulent bitumen concentrate containing from 10 to 85% by weight, preferably from 40 to 80% by weight of synthetic silica.

2. The use of the pulverulent bitumen concentrate according to claim 1 for the production of asphalt mixtures for the construction of roads.

**Revendications**

1. Concentré bitumineux en poudre, avec une teneur en acide silicique synthétique de 10 à 85% en poids, de préférence 40 à 80% en poids.

2. Utilisation du concentré bitumineux en poudre selon la revendication 1, pour la production de mélanges d'asphalte pour la construction de routes.